Europäisches Patentamt

European Patent Office

Office européen des brevets

(19)

(11) Veröffentlichungsnummer: **0 017 165 B1**

(12) # EUROPÄISCHE PATENTSCHRIFT

(45) Veröffentlichungstag der Patentschrift:
08.09.82

(51) Int. Cl.³: **B 65 G 17/06**, B 65 G 21/20

(21) Anmeldenummer: 80101620.5

(22) Anmeldetag: 27.03.80

(54) **Kettenbahn, insbesondere für Doppelendprofiler, Kantenbearbeitungsautomaten o.dgl.**

(30) Priorität: 28.03.79 DE 2912194

(43) Veröffentlichungstag der Anmeldung:
15.10.80 Patentblatt 80/21

(45) Bekanntmachung des Hinweises auf die Patenterteilung:
08.09.82 Patentblatt 82/36

(84) Benannte Vertragsstaaten:
AT BE FR GB IT

(56) Entgegenhaltungen:
CH-A-466 137
GB-A-151 838
GB-A-532 438
US-A-3 398 871

(73) Patentinhaber: F. Meyer & Schwabedissen GmbH & Co.
KG, Diebrocker Strasse 3-7, D-4900 Herford (DE)

(72) Erfinder: Rottmann, Manfred, Karl-Severing-Strasse 10,
D-4901 Hiddenhausen 3 (DE)

(74) Vertreter: Gramm, Werner, Dipl.-Ing. et al,
Patentanwälte Gramm + Lins Theodor-Heuss-Strasse 2,
D-3300 Braunschweig (DE)

Kettenbahn, insbesondere für Doppelendprofiler, Kantenbearbeitungsautomaten o. dgl.

Die Erfindung betrifft eine Kettenbahn, insbesondere für Doppelendprofiler, Kantenbearbeitungsautomaten o. dgl., bestehend aus Kettengliedern, die ein endloses, um Kettenräder umgelenktes Kettenband mit im wesentlichen durchgehender Lasttragfläche bilden, durch Kettenlaschen und parallele Kettenbolzen miteinander verbunden sind und sich auf zwei parallel und im Abstand voneinander angeordneten stationären Schienen abstützen.

Bei einer bekannten Ausführungsform stützen sich die Kettenglieder mit auf den Kettenbolzen sitzenden Rollen auf den stationären Schienen ab. Letztere liegen in dem Bereich zwischen den das Kettenband umlenkenden Kettenrädern. Die Stütz- bzw. Führungslager des Kettenbandes zahnen beim Umlenken des Kettenbandes in die Kettenräder ein. Dadurch ergibt sich ein ständiges Abbremsen und erneutes Anlaufen der Lager beim Umlauf des Kettenbandes. Hieraus resultiert ein entsprechend hoher Verschleiss.

Der Erfindung liegt die Aufgabe zugrunde, die eingangs erläuterte Kettenbahn hinsichtlich des Verschleisses sowie der Exaktheit der Führung des Kettenbandes zu verbessern.

Diese Aufgabe wird gemäss der Erfindung dadurch gelöst, dass die eine Schiene eine Führungsleiste ist, die mit den Kettengliedern eine Prismenführung bildet, während die andere Schiene eine Stützleiste ist, und dass die Kettenlaschen und Kettenbolzen unterhalb der Schienen-Auflagerebene zwischen Führungs- und Stützleiste liegen.

Die die Prismenführung bildende Führungsleiste kann eine durchgehende Prismenschneide aufweisen, so dass sich eine spielfreie Prismen-Gleitführung ergibt. Die Stützleiste kann eine flache Gleitfläche aufweisen. Durch die zentrierende Prismenführung erhält man eine hohe Führungsgenauigkeit des Kettenbandes. Es erfolgt kein Einzahnen der Führungs- und Stützlager, sondern ausschliesslich der Kettenbolzen. Insgesamt ergibt sich ein erheblich verringerter Verschleiss bei nur noch geringer Wartung der Kettenbahn. Dadurch, dass die Kettenlaschen sowie die Kettenbolzen unterhalb der Auflagerebene zwischen den Schienen und den Kettengliedern liegen, erhält man einen sehr geringen Abstand zwischen der Führung der Kettenglieder sowie ihrer Lasttragfläche und damit bezogen auf die zu befördernde Last ein sehr geringes Kippmoment. Die Antriebsleistungen sowie die Kettenzugbelastung sind gering. Man erhält eine verringerte Vorschubwellenverdrehung und dadurch eine höhere Bearbeitungsgenauigkeit an den von dem Kettenband transportierten Werkstücken.

Die Prismenführung seitens der Führungsleiste kann durch Kugellager mit entsprechend positif profiliertem Aussenring gebildet sein, die in eine entsprechend negativ ausgebildete Prismenbahn der Kettenglieder eingreifen. Die Prismengleitführung kann also durch eine rollende Prismenführung ersetzt werden. Ebenso kann die Stützleiste mit Stützlagern mit glattem Aussenring bestückt sein, so dass sich auch hier eine rollende Abstützung ergibt. Die zentrierende Führung erfolgt jedoch in jedem Fall durch die Führungsleiste. Die Verwendung von Kugellagern erweist sich bei der neuen Konstruktion als unproblematisch, da diese Führungs- und Stützlager nicht einzahnen und so eine konstante Drehzahl aufweisen. Der Verschleiss der rollenden Führungen ist daher sehr gering.

Überall dort, wo sehr hohe Anforderungen an die Führungsgenauigkeit des Kettenbandes gestellt werden, kann eine Prismengleitführung vorgesehen werden, während in anderen Bereichen der Kettenbahn eine rollende Prismenführung ausreicht. In gleicher Weise lässt sich die rollende bzw. gleitende Ausbildung der Stützleiste kombinieren.

Die Prismen-Kugellager sowie die Stützlager sind vorzugsweise beidseitig abgedichtet. In einer zweckmässigen Ausführungsform können die Führungsleiste und/oder die Stützleiste im Querschnitt U-förmig ausgebildet und die Prismen-Kugellager bzw. die Stützlager jeweils zwischen den U-Schenkeln dieser beiden Schienen gelagert sein.

Die Kettenbolzen können in Nadellagern gelagert sein und mit ihren Bolzenenden über diese Nadellager hinausragen.

In der Zeichnung sind drei als Beispiele dienende Ausführungsformen der Erfindung dargestellt. Es zeigen:

Figur 1 einen Querschnitt gemäss der Linie I-I in Figur 2 durch den Obertrum einer Kettenbahn;

Figur 2 die Darstellung gemäss Figur 1 in Seitenansicht und in zwei verschiedenen Längsschnitten;

Figur 3 eine abgewandelte Ausführungsform in einer Darstellung gemäss Figur 1;

Figur 4 die Kettenbahn gemäss Figur 3 in Seitenansicht und

Figur 5 eine abgewandelte Ausführungsform in einer Darstellung gemäss den Figuren 1 oder 3.

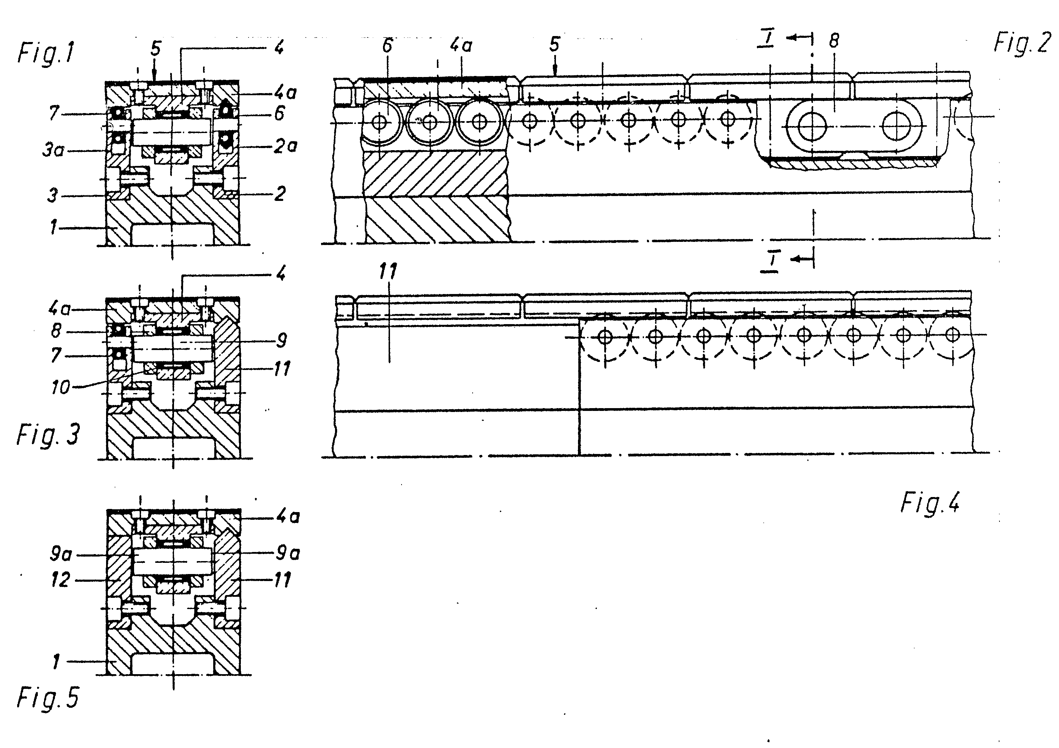

Gemäss den Figuren 1 und 2 besteht die dort dargestellte Kettenbahn aus einem Kettenbahnkörper 1, einer Führungsleiste 2, einer Stützleiste 3 sowie Kettengliedern 4, die eine im wesentlichen durchgehende Lasttragfläche 5 bilden.

Die Führungsleiste 2 ist mit dem Kettenbahnkörper 1 verschraubt und weist einen U-förmigen Querschnitt auf. Zwischen den U-Schenkeln 2a sind Kugellager 6 gelagert, deren Aussenringe im Querschnitt prismenförmig ausgebildet sind und in eine entsprechend negativ ausgebildete Prismenbahn 4a der Kettenglieder 4 eingreifen.

Auch die Stützleiste 3 ist mit dem Kettenbahnkörper 1 verschraubt und im Querschnitt U-förmig ausgebildet, wobei zwischen den U-Schenkeln 3a Stützlager 7 mit glattem, also flachem Aussenring gelagert sind, auf denen sich die andere Seite der Kettenglieder 4 abstützt.

Die Kettenglieder 4 sind durch Kettenlaschen 8 und parallele Kettenbolzen 9 miteinander verbunden. Letztere sind in Nadellagern 10 gelagert und ragen mit ihren Bolzenenden 9a über diese Nadellager hinaus, um so ein Einzahnen beim Umlauf um die in der Zeichnung nicht dargestellten Kettenräder zu ermöglichen. Figur 1 lässt erkennen, dass die Kettenlaschen 8 sowie die Kettenbolzen 9 mit den Nadellagern 10 unterhalb der Auflagerebene zwischen den Kettengliedern 4 und den Leisten 2, 3 liegen.

Die in den Figuren 3 und 4 dargestellte Ausführungsform unterscheidet sich von der vorstehend beschriebenen Konstruktion lediglich dadurch, dass die Führungsleiste 2 mit ihren Prismen-Kugellagern 6 ersetzt ist durch eine eine Gleitführung bildende Prismenleiste 11.

Bei der Ausführungsform gemäss Figur 5 ist die Stützleiste 3 mit ihren Stützlagern 7 ersetzt durch eine Stützleiste 12 mit flacher Gleitfläche.

## Patentansprüche

1. Kettenbahn, insbesondere für Doppelendprofiler, Kantenbearbeitungsautomaten o.dgl., bestehend aus Kettengliedern, die ein endloses, um Kettenränder umgelenktes Kettenband mit im wesentlichen durchgehender Lasttragfläche bilden, durch Kettenlaschen und parallele Kettenbolzen miteinander verbunden sind und sich auf zwei parallel und im Abstand voneinander angeordneten stationären Schienen abstützen, dadurch gekennzeichnet, dass die eine Schiene eine Führungsleiste (2, 6; 11) ist, die mit den Kettengliedern (4) eine Prismenführung (6, 4a; 11, 4a) bildet, während die andere Schiene eine Stützleiste (3; 12) ist, und dass die Kettenlaschen (8) und Kettenbolzen (9) unterhalb der Schienen-Auflagerebene zwischen Führungs- und Stützleiste liegen.

2. Kettenbahn nach Anspruch 1, dadurch gekennzeichnet, dass die Prismenführung seitens der Führungsleiste (2) durch Kugellager (6) mit entsprechend positiv profiliertem Aussenring gebildet ist, die in eine entsprechend negativ ausgebildete Prismenbahn (4a) der Kettenglieder (4) eingreifen.

3. Kettenbahn nach Anspruch 2, dadurch gekennzeichnet, dass die Prismen Kugellager (6) beidseitig abgedichtet sind.

4. Kettenbahn nach Anspruch 1, 2 oder 3, dadurch gekennzeichnet, dass die Stützleiste (3) mit Stützlagern (7) mit glattem Aussenring bestückt ist.

5. Kettenbahn nach Anspruch 4, dadurch gekennzeichnet, dass die Stützlager (7) beidseitig abgedichtet sind.

6. Kettenbahn nach einem der vorhergehenden Ansprüche, dadurch gekennzeichnet, dass die Kettenbolzen (9) in Nadellagern (10) gelagert sind und mit ihren Bolzenenden (9a) über diese Nadellager hinausragen.

7. Kettenbahn nach einem der vorhergehenden Ansprüche, dadurch gekennzeichnet, dass die Führungsleiste (2) und/oder die Stützleiste (3) im Querschnitt U-förmig ausgebildet und die Prismen-Kugellager (6) bzw. die Stützlager (7) jeweils zwischen den U-Schenkeln (2a bzw. 3a) dieser beiden Schienen gelagert sind.

## Claims

1. Chain transporter, in particular for double-end profiling machines, automatic edge working machines etc., consisting of chain links which form an endless chain band guided around sprockets with an essentially continuous load carrying surface, which chain links are joined together by link plates and parallel link pins and rest on two parallel stationary rails arranged at a distance from each other. Characterized in that one of the rails is a guide rail (2, 6; 11) which forms a prismatic guide (6, 4a; 11, 4a) with the chain links (4), whilst the other rail is a support rail (3, 12), and in that the link plates (8) and link pins (9) lie below the supporting level of the rail between guide rail and support rail.

2. Chain transporter according to claim 1, characterized in that the prismatic guide on the guide rail (2) is formed by ball bearings (6) with a correspondingly positively profiled outer ring which engage in a correspondingly negatively shaped prismatic track (4a) of the chain links (4).

3. Chain transporter according to claim 2, characterized in that the prismatic ball bearings (6) are sealed on both sides.

4. Chain transporter according to claim 1, 2 or 3, characterized in that the support rail (3) is equipped with support bearings (7) with smooth outer ring.

5. Chain transporter according to claim 4, characterized in that the support bearings (7) are sealed on both sides.

6. Chain transporter according to one of the preceding claims, characterized in that the link pins (9) are mounted in needle bearings (10) with their ends (9a) protruding beyond these needle bearings.

7. Chain transporter according to one of the preceding claims, characterized in that the guide rail (2) and/or the support rail (3) are U-shaped in cross-section and in that the prismatic ball bearings (6) and the support bearings (7) are arranged between the respective U-arms (2a and 3a) of these two rails.

## Revendications

1. Transporteur à chaîne, notamment pour machine à profiler à deux bouts, machine automatique de finition des chants, ou analogues, se composant de maillons qui forment un ruban de chaîne sans fin virant autour de roues à chaîne et comportant une surface essentiellement ininterrompue pour porter la charge, sont reliés entre eux par des tourillons de chaîne parallèles et des éclisses de chaîne, et s'appuient sur deux rails fixes parallèles écartés l'un de l'autre, caractérisé en ce que l'un des rails est une barre de guidage (2, 6; 11) qui forme avec les maillons (4) un guidage prismatique (6, 4a; 11, 4a), tandis que l'autre rail est une barre d'appui (3; 12), et en ce que les éclisses de chaîne (8) et les tourillons de chaîne (9) se trouvent entre les barres de guidage et d'appui, sous le plan d'appui des rails.

2. Transporteur selon la revendication 1, caractérisé en ce que le guidage prismatique du côté de la barre de guidage (2) est assuré par des roulements à billes (6), dont la bague extérieure a un profil positif correspondant, qui s'insèrent dans une piste prismatique (4a) des maillons (4) conformée de façon négative correspondante.

3. Transporteur selon la revendication 2, caractérisé en ce que les roulements prismatiques à billes (6) sont rendus étauches des deux côtés.

4. Transporteur selon la revendication 1, 2 ou 3, caractérisé en ce que la barre d'appui (3) est équipée de roulements d'appui (7) à bague extérieure lisse.

5. Transporteur selon la revendication 4, caractérisé en ce que les roulements d'appui (7) sont rendus étanches des deux côtés.

6. Transporteur selon l'une des revendications précédentes, caractérisé en ce que les tourillons de chaîne (9) sont supportés dans des roulements à aiguilles (10), et présentent des extrémités (9a) qui dépassent de ces roulements à aiguilles.

7. Transporteur selon l'une des revendications précédentes, caractérisé en ce que la barre de guidage (2) et/ou la barre d'appui (3) ont une section transversale en forme de «U», et les roulements prismatiques à billes (6) ou respectivement les roulements d'appui (7) sont logés chacun entre les branches du «U» (2a ou respectivement 3a) de ces deux rails.

Fig.1

7
3a
3
1

5    4
4a
6
2a
2

Fig.2

6    4a    5    I    8

I

Fig.3

4a
8
7
10

4
9
11

Fig.4

11

0 017 165

Fig.5

9a
12
1

4a
9a
11